# FASCICULE DE BREVET EUROPEEN

(11) **EP 2 391 589 B1**
(45) Date de publication et mention de la délivrance du brevet: **02.04.2014**
(21) Numéro de dépôt: 10707605.1
(22) Date de dépôt: 28.01.2010
(51) Int. Cl.: C04B 7/32, C04B 7/345, C04B 28/02, C04B 28/06

(54) **CLINKER SULFO-ALUMINEUX ET PROCÉDÉ POUR SA PRÉPARATION**
SULFOALUMINATKLINKER UND HERSTELLUNGSVERFAHREN DAFÜR
SULFOALUMINOUS CLINKER AND METHOD FOR PREPARING SAME

(30) Priorité: 28.01.2009 FR 0950506; 21.10.2009 FR 0957387
(43) Date de publication de la demande: 07.12.2011
(73) Titulaire: Vicat, 92095 Paris La Défense (FR)
(72) Inventeur: PASQUIER, Michel, F-69006 Lyon (FR); BARNES-DAVIN, Laury, F-38000 Grenoble (FR); BEAUVENT, Guy, F-62720 Wierre Effroy (FR)
(74) Mandataire: Verriest, Philippe
(86) Numéro de dépôt international: PCT/FR2010/050132
(87) Numéro de publication internationale: WO 2010/086555

(56) Documents cités:
- EP-A- 0 039 613
- FR-A- 2 873 366
- BERETKA J ET AL: "Influence of C4A3S~ content and W/S ratio on the performance of calcium sulfoaluminate-based cements" CEMENT AND CONCRETE RESEARCH, PERGAMON PRESS, ELMSFORD, NY, US, vol. 26, no. 11, 1 novembre 1996 (1996-11-01), pages 1673-1681, XP002320780 ISSN: 0008-8846
- ARJUNAN P ET AL: "Sulfoaluminate-belite cement from low-calcium fly ash and sulfur-rich and other industrial by-products" CEMENT AND CONCRETE RESEARCH, PERGAMON PRESS, ELMSFORD, NY, US, vol. 29, no. 8, 1 janvier 1999 (1999-01-01), pages 1305-1311, XP002320781 ISSN: 0008-8846
- GLASSER F P ET AL: "High-performance cement matrices based on calcium sulfoaluminate-belite compositions" CEMENT AND CONCRETE RESEARCH, PERGAMON PRESS, ELMSFORD, NY, US, vol. 31, no. 12, 1 décembre 2001 (2001-12-01), pages 1881-1886, XP002320779 ISSN: 0008-8846
- MAJLING J ET AL: "GENERALIZED BOGUE COMPUTATIONS TO FORECAST THE MINERALOGICAL COMPOSITION OF SULFOALUMINATE CEMENTS BASED ON FLY ASHES" ADVANCES IN CEMENT RESEARCH, LONDON, GB, vol. 11, no. 1, 1 janvier 1999 (1999-01-01), pages 27-34, XP008044126 ISSN: 0951-7197
- MEHTA P K: "INVESTIGATIONS ON ENERGY-SAVING CEMENTS" WORLD CEMENT TECHNOLOGY, CEMENT AND CONCRETE ASSOCIATION, LONDON, GB, 1 mai 1980 (1980-05-01), pages 166-177, XP008044077 ISSN: 0308-8855

## Description

La présente invention a pour objet un nouveau clinker sulfo-alumineux, un procédé de préparation de ce clinker, ainsi que l'utilisation du clinker pour la préparation de liant hydraulique et, par la suite, de coulis, béton ou mortier.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui broyé avec d'éventuels ajouts minéraux donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires. Comme ces familles ne sont pas totalement disjointes, il est préférable de les décrire par leurs constituants chimiques et minéralogiques.

Les ciments les plus répandus sont les ciments Portland. Les ciments Portland sont obtenus à partir de clinker Portland, obtenus après clinkérisation à une température de l'ordre de 1450°C d'un cru riche en carbonate de calcium dans un four.

La préparation de tels ciments présentent le désavantage de dégager beaucoup de CO₂. L'industrie du ciment est donc aujourd'hui à la recherche d'une alternative valable au ciment Portland, c'est-à-dire des ciments présentant au moins les même caractéristiques de résistance et de qualité que les ciments Portland, mais qui, lors de leur production, dégageraient moins de CO₂.

A ce titre, ces dernières années, les recherches se sont orientées vers les ciments dits sulfo-alumineux et sulfo-bélitiques, qui dégagent moins de CO₂ que les ciments Portland lors de leur production.

Le clinker étant le résultat d'une calcination à haute température, les éléments sont essentiellement présents sous forme d'oxydes. Les clinkers permettant la préparation de ciments sulfo-alumineux ou de ciments sulfo-bélitiques se rapportent à un procédé de fabrication d'un clinker à partir d'un cru constitué par un mélange comprenant les composés CaCO₃, Al₂O₃, et/ou Al(OH)₃ CaSO₄, SiO₂, Fe₂O₃ et/ou un produit contenant de la silice ou des silicates tels que l'argile, tous ces composés étant présents sous forme anhydre ou hydratée, individuellement ou en combinaison.

Le document EP 0 039 613 A décrit l'utilisation de bore dans les clinkers Portland afin de diminuer la température de clinkérisation. Cependant, ce document ne décrit pas de clinkers sulfo-alumineux contenant une phase C₁₁S₄B.

Dans le cadre de ces recherches, de nombreux clinkers sulfoalumineux ont été décrits. On peut par exemple citer la demande de brevet internationale WO 2006/018569 décrivant des clinkers sulfoalumineux bélitiques comprenant 5 à 25% de phase aluminoferrite calcique d'une composition correspondant à la formule générale C₂AF₍₁₋ₓ₎, avec x compris entre 0,2 et 0,8 ; 15 à 35% de phase sulfoaluminate de calcium « yee' limite » (C₄A₃$) ; 40 à 75% de bélite (C₂S) ; et de 0,01 à 10% d'une ou plusieurs phases mineures. Comme mentionné dans cette demande de brevet, de tels clinkers contiennent, en comparaison avec la phase alite (C₃S), la principale composante des ciments Portland, une quantité plus élevée de phase bélite (C₂S), ce qui est tout à fait bénéfique, puisque cela conduit à la réduction des émissions industrielles de CO₂ et de la consommation énergétique. D'autre part, la bélite contribue au développement de la résistance à long terme du ciment sulfo-alumineux bélitique. Cependant, cette demande de brevet ne mentionne pas la présence de phases silicate de calcium dopé au bore C₁₁S₄B et sulfoaluminate de calcium dopé en fer C₄A_{3-y}$F_{y}. De plus, rien n'est dit dans cette demande de brevet concernant la présence du polymorphe C₂S_{α} dans la phase C₂S.

Or, le polymorphisme de la bélite (C₂S) régit sa réactivité ou son hydraulicité. Les solutions solides avec des éléments mineurs tels que le bore, le sodium ou le potassium conduisent, dans une certaine mesure, à faire varier la nature cristallographique de la bélite. La présence de ces éléments mineurs, communément appelés minéraliseurs, peut aussi décaler les températures d'apparition de certaines variétés polymorphes.

La réactivité de la bélite est variable et dépend de sa forme. Dans la littérature scientifique, les polymorphes du C₂S apparaissent comme suit, en fonction de la température :

| C₂S_{γ} | | C₂S_{β} | | C₂S_{α'low} (C₂S_{α'1}) | | C₂s_{α'high} (C₂S_{α'h}) | | C₂S_{α} | |
|---|---|---|---|---|---|---|---|---|---|
| | | | | | | | | | |
| | 500°C | | 675°C | | 1177°C | | 1425°C | | |

La réactivité hydraulique, c'est-à-dire la vitesse de prise et montée en résistance mécanique, décroit du polymorphe C₂S_{α} au polymorphe C₂S_{γ}. Dans le cas des clinkers Portland, la bélite, essentiellement représentée par le polymorphe C₂S_{β}, contribue à la résistance mécanique à la compression à long terme, soit aux échéances de 28 jours et au-delà. Le polymorphe C₂S_{α} est plus réactif que le polymère C₂S_{β} et présente une réactivité s'approchant de l'Alite C₃S, phase majoritaire du clinker Portland. Le polymorphe C₂S_{α} représente de plus une alternative intéressante au C₃S des clinkers Portland car il permet d'en approcher la réactivité tout en limitant les émissions de CO₂ du fait d'une stoechiométrie moindre en calcium donc nécessitant moins de carbonate pour le fabriquer. Il est donc souhaitable dans un clinker que le polymorphe C₂S_{α} soit présent dans la phase C₂S.

D'autre part, la présence de la phase sulfoaluminate de calcium « yee'limite » C₄A₃$ ou de la phase sulfoaluminate de calcium dopé en fer C₄A_{3-y}$F_{y} est nécessaire à la prise et à la résistance mécanique à la compression à très court terme du ciment préparé à partir du clinker.

La présence simultanée dans le clinker de la bélite contenant le polymorphe C₂S_{α} et de la phase sulfoaluminate de calcium « yee'limite » C₄A₃$ ou de la phase sulfoaluminate de calcium dopé en fer C₄A_{3-y}$F_{y} est donc nécessaire à la préparation d'un ciment de qualité.

Or, le polymorphe C₂S_{α} apparait au-delà de 1425°C. Pour atteindre une telle température, une grande quantité d'énergie est nécessaire ce qui entraine des émissions de CO₂ importantes lors de la préparation du clinker. De plus, à cette température, la phase sulfoaluminate de calcium « yee'limite » C₄A₃$ est déjà fortement résorbée en Mayenite C₁₂A₇, nuisible à la qualité finale du clinker. De plus, cette résorption est accompagnée d'un dégagement de SO₂ incompatible avec la conduite d'une installation industrielle respectueuse de l'environnement. Des phénomènes identiques sont observés pour la phase sulfoaluminate de calcium dopé en fer C₄A_{3-y}$F_{y}.

En conséquence, concilier la présence de « yee'limite » (C₄A₃$) ou de sulfoaluminate de calcium dopé en fer C₄A_{3-y}$F_{y} et de bélite réactive (C₂S_{α}) est impossible en travaillant à la température d'apparition de cette dernière (1425°C). De plus, les émissions de CO₂ et de SO₂ lors de la préparation d'un clinker à une telle température demeurent trop importantes au regard des contraintes écologiques actuelles et futures.

Il y a donc une nécessité d'identifier de nouveaux clinkers pouvant être préparés à des températures plus basses que 1425°C tout en assurant la présence de bélite (C₂S) contenant le polymorphe C₂S_{α} et de « yee'limite » (C₄A₃$) ou de sulfoaluminate de calcium dopé en fer C₄A_{3-y}$F_{y}.

D'autre part, lors de la préparation de clinkers, l'homme du métier doit régulièrement faire face à des problématiques de collage des matériaux aux parois du four au moment de la cuisson des crus. Ces phénomènes de collage sont principalement dus à la présence de fer dans les crus utilisés pour la préparation. Il y a donc également une nécessité d'identifier de nouveaux clinkers pouvant être préparés à partir de crus riches en fer sans pour autant augmenter l'apparition des phénomènes de collage.

Il a maintenant été trouvé de nouveaux clinkers sulfo-alumineux permettant de résoudre ces problèmes techniques, et permettant en particulier l'obtention de bélite C₂S contenant le polymorphe C₂S_{α} à des températures largement inférieures à 1425°C, permettant ainsi l'obtention d'un clinker contenant à la fois une phase C₂S contenant le polymorphe C₂S_{α} et une phase sulfoaluminate de calcium « yee'limite » C₄A₃$ ou une phase sulfoaluminate de calcium dopé en fer C₄A_{3-y}$F_{y}, tout en réduisant fortement les émissions de CO₂ lors de leur préparation.

De plus, il a été observé de façon toute à fait surprenante que de tels clinkers permettaient la préparation de ciments présentant un temps de prise réduit en comparaison des ciments préparés à partir des clinkers décrits dans la demande de brevet internationale WO 2006/018569, tout en maintenant une réactivité hydraulique et une résistance au moins comparable à celles de ces mêmes ciments. Les ciments ainsi préparés présentent donc l'avantage de pouvoir être utilisés lorsque l'usage nécessite de la rapidité ou de la réactivité par temps froid. La rapidité est notamment nécessaire lors de la réalisation d'éléments en béton en usine de préfabrication où la rotation des moules est un élément déterminant pour la profitabilité du site et de l'utilisation de béton prêt à l'emploi ayant une prise et une cinétique de montée en résistance rapide sur des chantiers où une cadence rapide est requise. Une réactivité accrue est également nécessaire par temps froid notamment pour les travaux hivernaux ou effectués en altitude où la prise doit intervenir avant le gel possible de l'élément en béton.

D'autre part, de tels clinkers permettant de réduire les émissions de CO₂ de près de 35% lors de leur préparation en comparaison de clinkers de type Portland.

Enfin, il a été observé que la présence simultanée de la phase aluminoferrite calcique d'une composition correspondant à la formule générale C₂AₓF₍₁₋ₓ₎ et de la phase sulfoaluminate de calcium dopé en fer C₄A_{3-y}$F_{y} dans les clinkers selon la présente invention permettait de cuire des crus ayant une teneur en fer élevée sans pour autant observer d'augmentation des phénomènes de collage. Cette caractéristique des clinkers selon la présente invention qui permet l'utilisation d'une gamme plus large de matériaux pour le préparer, tels que par exemple de la bauxite riche en fer.

La présente invention a donc pour objet un clinker sulfo-alumineux comprenant comme composition phasique, par rapport au poids total du clinker :
- de 5 à 25 % de phase aluminoferrite calcique d'une composition correspondant à la formule générale C₂AₓF₍₁₋ₓ₎, avec x variant de 0,2 à 0,8 ;
- de 15 à 35% de phase sulfoaluminate de calcium éventuellement dopé en fer correspondant à la formule C₄A_{3-y}$F_{y} avec y variant de 0 à 0,5 ;
- de 10 à 50% de bélite C₂S, ladite bélite contenant au moins 3% de polymorphe C₂S_{α} et
- de 2 à 25% de silicate de calcium dopé au bore correspondant à la formule C₁₁S₄B.

Le clinker selon la présente invention permet la préparation de ciments présentant une réactivité hydraulique et une résistance accrue en comparaison des ciments décrits dans l'art antérieur. De plus, le clinker selon la présente invention peut être préparé à des températures ne dépassant pas 1350°C, ce qui limite d'une part les émissions de CO₂ et d'autre part la destruction de la phase C₄A_{3-y}$F_{y}. Enfin, les clinkers selon l'invention peuvent être préparés à partir de crus ayant une teneur en fer élevée sans pour autant observer d'augmentation des phénomènes de collage.

Dans le cadre de la présente invention, les notations suivantes sont adoptées pour désigner les composants minéralogiques du ciment :
- C représente CaO ;
- A représente Al₂O₃ ;
- F représente Fe₂O₃ ;
- S représente SiO₂ ; et
- $ représente SO₃.
Ainsi, par exemple, la phase sulfoaluminate de calcium éventuellement dopé en fer désigné par C₄A_{3-y}$F_{y} correspond en réalité à une phase (CaO)_{4.}(Al₂O₃)_{3-y.}SO_{3.}(F₂O₃)_{y}

De plus, dans le cadre de la présente invention, les proportions exprimées en % correspondent à des pourcentages massiques par rapport au poids total de l'entité (clinker ou liant hydraulique) considérée.

De préférence, la présente invention a pour objet un clinker sulfo-alumineux dans lequel les caractéristiques suivantes sont choisies seules ou en combinaison :
- le clinker contient de 10 à 20 % de phase aluminoferrite calcique C₂AₓF₍₁₋ₓ₎ ;
- le clinker contient de 20 à 30% de phase sulfoaluminate de calcium éventuellement dopé en fer C₄A_{3-y}$F_{y} ;
- le clinker contient de 10 à 35% de bélite C₂S, ladite bélite contenant au moins 3% de polymorphe C₂S_{α} ; et
- le clinker contient de 5 à 25% de silicate de calcium dopé au bore C₁₁S₄B.

De préférence encore, la présente invention a pour objet un clinker sulfo-alumineux dans lequel les caractéristiques suivantes sont choisies seules ou en combinaison :
- le clinker contient de 10 à 20 % de phase aluminoferrite calcique C₂AₓF₍₁₋ₓ₎ ;
- le clinker contient de 20 à 30% de phase sulfoaluminate de calcium éventuellement dopé en fer C₄A_{3-y}$F_{y} ;
- le clinker contient de 10 à 35% de bélite C₂S, ladite bélite contenant au moins 3% de polymorphe C₂S_{α} ; et
- le clinker contient de 10 à 25% de silicate de calcium dopé au bore C₁₁S₄B.

Préférentiellement, la présente invention a pour objet un clinker sulfo-alumineux tel que décrit ci-avant dans lequel la bélite C₂S contient au moins 5%, de préférence au moins 10%, de préférence encore au moins 20%, de préférence encore au moins 30%, de préférence encore au moins 40% et de façon toute à fait préférée au moins 50% de polymorphe C₂S_{α}.

D'autres phases minoritaires peuvent apparaître dans la constitution du clinker. Ces phases mineures peuvent être constituées de la chaux libre CaOl, de l'anhydrite C$, de la Gélenhite C₂AS, de la Mayenite C₁₂A₇, de la Péricalse MgO, de la Perovskite CT, C₃FT, C₄FT₂. De façon préférée, le clinker selon l'invention contient :
- moins de 3% de CaOl, de préférence moins de 1% de CaOl ;
- moins de 5% de C$, de préférence moins de 2% de C$ ; et/ou
- moins de 10% de C₂AS, de préférence moins de 5% de C₂AS.

La présente invention a également pour objet un procédé de préparation d'un clinker tel que décrit précédemment, comprenant les étapes suivantes :
- préparation d'un cru par dosage des matières premières afin d'apporter les quantités d'éléments nécessaires à l'obtention de la composition phasique souhaitée,
- mélange (éventuellement par co-broyage) des matières premières,
- cuisson du mélange des matières premières à une température allant de 1250°C à 1350°C, et
- refroidissement rapide du clinker.

De préférence, l'étape de cuisson du procédé selon la présente invention est conduite à une température allant de 1280°C à 1340°C.

Le clinker selon la présente invention peut être préparé à partir de différentes matières premières telles que les boues rouges, la bauxite, le calcaire, le gypse ou toute autre source de sulfate de calcium, l'acide borique, la colémanite, le borate hydraté de sodium, les marnes argilo-calcaires ou les sous-produits de l'industrie de l'aluminium et de l'alumine.

La qualité de la cuisson, et notamment les respects en tout point d'une atmosphère oxydante et des températures maximum de 1350°C, est fondamentale. La préparation des clinkers selon l'invention se fera donc dans un four permettant le respect de ces conditions. A titre d'exemple de fours appropriés pour préparer les clinkers selon la présente invention, on peut citer le four décrit dans la demande de brevet internationale publiée sous le numéro WO-A-2009/122065. Le four décrit dans cette demande de brevet est particulièrement approprié pour la préparation de clinkers selon l'invention car il contribue à l'apparition de la cinétique des phases finalement souhaitées.

Le clinker selon la présente invention peut être utilisé pour préparer un liant hydraulique, par exemple du ciment, par broyage et éventuel ajout de gypse, d'anhydrite ou d' hémihydrate. La présente invention concerne donc également un liant hydraulique comprenant un clinker tel que décrit précédemment sous forme broyé. Préférentiellement, le liant hydraulique selon la présente invention comprend également un ajout de gypse, d'anhydrite ou d'hémihydrate, dans des proportions pouvant aller jusqu'à 20%.
Le liant hydraulique selon la présente invention peut également comprendre des ajouts du même type que ceux utilisés pour le ciment Portland tels que par exemple le calcaire, les pouzzolanes naturelles et artificielles, le laitier de haut fourneau, les cendres volantes de foyers au charbon et les fumées de silice. Cet ajout est réalisé par mélange avant ou après le broyage des constituants, par mélange des poudres ou par co-broyage. La prise du liant est alors la résultante de l'activation des ajouts par le clinker, en conséquence l'économie de CO₂ par rapport à un ciment de type CEM I (suivant la norme EN 197-1) peut être considérable, allant jusqu'à 90% de réduction des émissions de CO₂ selon la teneur en ajout.
Enfin, la présente invention concerne également les différents produits préparés à partir du liant décrit précédemment, en particulier les coulis, les bétons et les mortiers. Ainsi, la présente invention a également pour objet un coulis, un béton ou un mortier comprenant le liant hydraulique tel que décrit précédemment.

La présente invention peut être illustrée de façon non limitative par les exemples suivants.

### Exemple 1

Un cru a été réalisé avec les matières premières suivantes dont voici les analyses chimiques.

| | **Calcaire** | **Boue rouge** | **Bauxite** | **Gypse** | **Acide borique** |
|---|---|---|---|---|---|
| SiO₂ (en %) | 2,75 | 7,1 | 26,11 | 0,33 | |
| Al₂O₃ (en %) | 0,19 | 13,04 | 39 | 0,31 | |
| CaO (en %) | 52,85 | 4,51 | 2 | 30,31 | |
| MgO (en %) | 0,64 | 0,17 | 0,22 | 0,02 | |
| Fe₂O₃ (en %) | 0,37 | 49,52 | 16,22 | 0,13 | |
| TiO₂ (en %) | 0,04 | 10,54 | 1,89 | 0,04 | |
| K₂O (en %) | 0,12 | 0,08 | 0,22 | 0,06 | |
| Na₂O (en %) | 0,08 | 4,2 | 0,05 | 0,3 | 0 |
| P₂O₅ (en %) | 0,02 | 0,45 | 0,18 | 0,42 | |
| Mn₂O₃ (en %) | 0,01 | 0,08 | 0,07 | | |
| SO₃ (en %) | 0,33 | 0,26 | 0,05 | 46,58 | |
| B₂O₃ (en %) | 0 | 0 | 0 | 0 | 56,29 |
| Autres Non volatils (en %) | 0,04 | 0 | 0,04 | 1,54 | |
| | | | | | |
| Perte au feu (en %) | 42,18 | 9,72 | 13,7 | 19,91 | 43,66 |
| **Total (en %)** | **99,62** | **99,67** | **99,75** | **99,95** | **99,95** |

On entend par perte de feu la perte de masse constatée après cuisson à 950°C.
Boue rouge : résidus industriels du traitement de la bauxite par le procédé Bayer (Rio Tinto).
Les phases cristallographiques : Fe₂O₃, Goethite, Rutile, Perovskite, Quartz, Gibsite, Boehmite, Portlandite, Calcite, Cancrinite.
Bauxite : de la société Sodicapei : B40 soit ± 40 % d'Al₂O₃.
Gypse : sous produit industriel issu de la fabrication d'acide phosphorique
Acide borique technique.

Un mélange intime a été effectué dans les proportions suivantes (tout passant à 100 µm) :

| | % |
|---|---|
| Calcaire | 57,26 |
| Boue rouge | 8,5 |
| Bauxite | 25,6 |
| Gypse | 5,1 |
| acide borique | 3,4 |

Une cuisson dans un four à passage a été réalisée à 1290°C pendant 30 minutes.

Les phases cristallines obtenues sont les suivantes :

| **Composition minéralogique** | **%** |
|---|---|
| C₄A_{2,85}$F_{0,15} | 28,0 |
| C₂S_{α'h} | 3,8 |
| C₂A_{0.6}F_{1.4} | 11,8 |
| C₃FT | 14,3 |
| C₂S_{α} | 14,8 |
| C₁₁S₄B | 23,6 |
| MgO / Périclase | 1,4 |
| C₂AS / Géhlénite | 2,4 |

### Exemple 2

Le clinker obtenu à l'exemple 1 a été broyé avec 6% de gypse de telle sorte que le diamètre médian soit de 10,5µm.

Le début de prise et la fin de prise ont été déterminés avec la méthode de l'aiguille Vicat.

Des éprouvettes 2x2x2 cm ont été constituées en pâte pure à E/C=0,3 et écrasées à différentes échéances.

Les résultats sont rassemblés dans le tableau suivant :

| | | |
|---|---|---|
| Début de prise | 61 minutes | |
| Fin de prise | 82 minutes | |
| Résistance en compression | 6 heures | 10.1 Mpa |
| | 1 jour | 43.8 Mpa |
| | 4 jours | 54.9 Mpa |
| | 8 jours | 63.2 Mpa |
| | 28 jours | 73.3 Mpa |

Le ciment ainsi préparé permet de concilier des performances au jeune âge élevées tout en ayant un temps d'utilisation confortable (début de prise à 61 min)

### Exemple 3

Un cru a été réalisé avec les matières premières suivantes dont voici les analyses chimiques et les quantités relatives.

| | Bauxite Weipa | Gypse | Filler calcaire | Silice Sifraco | Boue rouge | Acide borique |
|---|---|---|---|---|---|---|
| SiO₂ (en %) | 6,47 | 0,51 | 0,51 | 99,53 | 7,60 | |
| Al₂O₃ (en %) | 53,79 | 0,23 | 0,12 | 0,13 | 12,68 | |
| CaO (en %) | 1,43 | 31,34 | 54,70 | 0,28 | 5,92 | |
| MgO (en %) | 0,17 | 0,06 | 0,49 | 0,05 | 0,22 | |
| Fe₂O₃ (en %) | 9,80 | 0,10 | 0,31 | 0,03 | 46,53 | |
| TiO₂ (en %) | 2,70 | 0,04 | 0,01 | 0,01 | 11,20 | |
| K₂O (en %) | 0,03 | 0,04 | 0,03 | 0,01 | 0,10 | |
| Na₂O (en %) | 0,08 | 0,29 | 0,08 | 0,06 | 3,81 | |
| P₂O₅ (en %) | 0,10 | 1,08 | 0,03 | 0,00 | 0,51 | |
| Mn₂O₃ (en %) | 0,02 | 0,02 | 0,01 | 0,01 | 0,08 | |
| SO₃ (en %) | 0,07 | 44,78 | 0,14 | 0,01 | 0,23 | |
| B₂O₃ (en %) | | | | | | 56,31 |
| Autres Non volatils (en %) | 0,00 | 1,36 | 0,05 | 0,00 | 0,07 | |
| | | | | | | |
| Perte au feu à 950°C (en %) | 25,23 | 19,92 | 43,50 | 0,21 | 10,60 | 43,69 |
| **Total (en %)** | **99,89** | **99,77** | **99,98** | **100,33** | **99,55** | **100** |

Pour préparer ce cru, un mélange intime a été effectué dans les proportions suivantes :

| Bauxite Weipa | Gypse | Filler calcaire | Silice Sifraco | Boue rouge | Acide borique |
|---|---|---|---|---|---|
| 18,37% | 5,11% | 57,62% | 7,02% | 11,69% | 0,18% |

Cette composition est cuite en respectant le protocole suivant :
- de la température ambiante à 950°C avec une pente de 15°C/min,
- palier de 30 min à 950°C,
- de 950°C à 1300°C, avec pente de 5°C/min,
- palier de 30 min à 1300°C
- suivi d'un retour à la température ambiante en 10 min.

L'analyse minéralogique du clinker ainsi obtenu est la suivante :

| **Composition minéralogique** | **%** |
|---|---|
| C₄A₃$ | 28,4 |
| C₂S_{α'h} | 10,2 |
| C₂A_{0,3}F_{0,7} | 16,7 |
| C₄FT₂ | 11,4 |
| C₂S_{α} | 3,3 |
| C₂S_{β} | 23,6 |
| C₁₁S₄B | 2,4 |
| C₁₂A₇ | 1,4 |
| Na₂SO₄ | 0,9 |
| C₂AS / Géhlénite | 1,7 |

### Exemple 4

Le clinker de l'exemple 3 est broyé avec 5% de gypse additionnel. Les performances sont évaluées suivant la norme EN 197-1 et normes essais associées à celle-ci.

Des barrettes de mortier 4x4x16 à E/C=0,5 sont réalisées, le temps de prise est mesuré grâce à l'aiguille Vicat.

Les résultats sont rassemblés dans le tableau suivant

| | | |
|---|---|---|
| Début de prise | 75 minutes | |
| Fin de prise | 105 minutes | |
| Résistance en compression | 6 heures | 7,5 Mpa |
| | 1 jour | 18,5 Mpa |
| | 7 jours | 39,5 Mpa |
| | 28 jours | 55,2 Mpa |

Le ciment préparé à partir du clinker de l'invention présente donc un temps de prise réduit en comparaison des ciments préparés à partir des clinkers décrits dans la demande de brevet internationale WO 2006/018569, tout en maintenant une réactivité hydraulique et une résistance au moins comparable à celles de ces mêmes ciments.

## Revendications

1. Clinker sulfo-alumineux comprenant comme composition phasique, par rapport au poids total du clinker :
- de 5 à 25 % de phase aluminoferrite calcique d'une composition correspondant à la formule générale C₂AₓF₍₁₋ₓ₎, avec x variant de 0,2 à 0,8 ;
- de 15 à 35% de phase sulfoaluminate de calcium éventuellement dopé en fer correspondant à la formule C₄A_{3-y}$F_{y} avec y variant de 0 à 0,5 ;
- de 10 à 50% de bélite C₂S, ladite bélite contenant au moins 3% de polymorphe C₂S_{α} et
- de 2 à 25% de silicate de calcium dopé au bore correspondant à la formule C₁₁S₄B.

2. Clinker selon la revendication 1, **caractérisé en ce qu'**il comprend de 10 à 20 % de phase aluminoferrite calcique C₂AₓF₍₁₋ₓ₎.

3. Clinker selon la revendication 1 ou 2, **caractérisé en ce qu'**il comprend de 20 à 30% de phase sulfoaluminate de calcium éventuellement dopé en fer C₄A_{3-y}$F_{y},

4. Clinker selon l'une des revendications 1 à 3, **caractérisé en ce qu'**il comprend de 10 à 35% de bélite C₂S, ladite bélite contenant au moins 3% de polymorphe C₂S_{α}.

5. Clinker selon l'une des revendications 1 à 4, **caractérisé en ce qu'**il comprend de 5 à 25% de silicate de calcium dopé au bore C₁₁S₄B.

6. Clinker selon la revendication 5, **caractérisé en ce qu'**il comprend de 10 à 25% de silicate de calcium dopé au bore C₁₁S₄B.

7. Clinker selon l'une des revendications 1 à 6, **caractérisé en ce que** la bélite C₂S contient au moins 30% de polymorphe C₂S_{α}.

8. Clinker selon l'une des revendications 1 à 7, **caractérisé en ce que** la bélite C₂S contient au moins 50% de polymorphe C₂S_{α}.

9. Clinker selon l'une des revendications 1 à 8, **caractérisé en ce qu'**il comprend moins de 3% de CaOl, moins de 5% de C$ et/ou moins de 10% de C₂AS.

10. Procédé de préparation d'un clinker selon l'une quelconque de revendications 1 à 9, **caractérisé en ce qu'**il comprend les étapes suivantes :
- préparation d'un cru par dosage des matières premières afin d'apporter les quantités d'éléments nécessaires à l'obtention de la composition phasique souhaitée,
- mélange des matières premières,
- cuisson du mélange des matières premières à une température allant de 1250°C à 1350°C, et
- refroidissement rapide du clinker.

11. Procédé selon la revendication 10, **caractérisé en ce que** l'étape de cuisson s'effectue à une température allant de 1280°C à 1340°C.

12. Liant hydraulique comprenant un clinker selon l'une quelconque des revendications 1 à 9.

13. Coulis comprenant un liant hydraulique selon la revendication 12.

14. Béton comprenant un liant hydraulique selon la revendication 12.

15. Mortier comprenant un liant hydraulique selon la revendication 12.

## Patentansprüche

1. Sulfoaluminatklinker, umfassend als phasische Zusammensetzung mit Bezug auf das Gesamtgewicht des Klinkers:
- von 5 bis 25 % Kalziumaluminoferrit-Phase einer Zusammensetzung, die der allgemeinen Formel C₂A₈F₍₁₋ₓ₎ entspricht, wobei x von 0,2 bis 0,8 variiert;
- von 15 bis 35 % Sulfoaluminat-Phase, eventuell dotiert mit Eisen, entsprechend der Formel C₄A_{3-y}$F_{y}, wobei y von 0 bis 0,5 variiert;
- von 10 bis 50 % Belit C₂S, wobei der Belit mindestens 3 % Polymorph C₂S_{α} umfasst; und
- von 2 bis 25 % Kalziumsilikat, dotiert mit Bor, entsprechend der Formel C₁₁S₄B.

2. Klinker nach Anspruch 1, **dadurch gekennzeichnet, dass** er von 10 bis 20 % Kalziumaluminoferrit-Phase C₂AₓF₍₁₋ₓ₎ umfasst.

3. Klinker nach Anspruch 1 oder 2, **dadurch gekennzeichnet, dass** er von 20 bis 30 % Kalziumsulfoaluminat-Phase, eventuell dotiert mit Eisen C₄A₃-_{y}$F_{y}, umfasst.

4. Klinker nach einem der Ansprüche 1 bis 3, **dadurch gekennzeichnet, dass** er von 10 bis 35 % Belit C₂S umfasst, wobei der Belit mindestens 3 % Polymorph C₂S_{α} enthält.

5. Klinker nach einem der Ansprüche 1 bis 4, **dadurch gekennzeichnet, dass** er von 5 bis 25 % Kalziumsilikat umfasst, dotiert mit Bor C₁₁S₄B.

6. Klinker nach Anspruch 5, **dadurch gekennzeichnet, dass** er von 10 bis 25 % Kalziumsilikat umfasst, dotiert mit Bor C₁₁S₄B.

7. Klinker nach einem der Ansprüche 1 bis 6, **dadurch gekennzeichnet, dass** der Belit C₂S mindestens 30% Polymorph C₂S_{α} umfasst.

8. Klinker nach einem der Ansprüche 1 bis 7, **dadurch gekennzeichnet, dass** der Belit C₂S mindestens 50 % Polymorph C₂S_{α} umfasst.

9. Klinker nach einem der Ansprüche 1 bis 8, **dadurch gekennzeichnet, dass** er weniger als 3 % CaOl, weniger als 5 % C$ und/oder weniger als 10 % C₂AS.

10. Verfahren zur Zubereitung eines Klinkers nach einem der Ansprüche 1 bis 9, **dadurch gekennzeichnet, dass** es die folgenden Schritte umfasst:
- Zubereiten einer Rohform durch die Dosierung der Rohmaterialien, um die Mengen der Elemente zuzugeben, die erforderlich sind, um die gewünschte phasische Zusammensetzung zu erhalten.
- Mischen der Rohmaterialien,
- Brennen der Mischung der Rohmaterialien bei einer Temperatur von 1250 °C bis 1350 °C, und
- schnelles Abkühlen des Klinkers.

11. Verfahren nach Anspruch 10, **dadurch gekennzeichnet, dass** der Schritt des Brennens bei einer Temperatur von 1280 °C bis 1340 °C erfolgt.

12. Hydraulisches Bindemittel, umfassend einen Klinker nach einem der Ansprüche 1 bis 9.

13. Aufschlämmung, umfassend ein hydraulisches Bindemittel nach Anspruch 12.

14. Beton, umfassend ein hydraulisches Bindemittel nach Anspruch 12.

15. Mauermörtel, umfassend ein hydraulisches Bindemittel nach Anspruch 12.

## Claims

1. A sulfoaluminous clinker comprising as phase composition, based on the total weight of the clinker:
- from 5 to 25% of calcium aluminoferrite phase of a composition corresponding to the general formula C₂AₓF₍₁₋ₓ₎, with x varying from 0.2 to 0.8;
- from 15 to 35% of calcium sulfoaluminate phase optionally doped with iron corresponding to the formula C₄A_{3-y}$F_{y}, with y varying from 0 to 0.5;
- from 10 to 50% of belite C₂S, said belite containing at least 3% of C₂S_{α} polymorph; and
- from 2 to 25% of boron-doped calcium silicate corresponding to the formula C₁₁S₄6.

2. The clinker according to Claim 1, **characterized in that** it comprises from 10 to 20% of calcium aluminoferrite phase C₂AₓF₍₁₋ₓ₎.

3. The clinker according to Claim 1 or 2, **characterized in that** it comprises from 20 to 30% of calcium sulfoaluminate phase optionally doped with iron C₄A_{3-y}$F_{y}.

4. The clinker according to any of Claims 1 to 3, **characterized in that** it comprises from 10 to 35% of belite C₂S, said belite containing at least 3% of C₂S_{α} polymorph.

5. The clinker according to any of Claims 1 to 4, **characterized in that** it comprises from 5 to 25% of boron-doped calcium silicate C₁₁S₄B.

6. The clinker according to Claim 5, **characterized in that** it comprises from 10 to 25% of boron-doped calcium silicate C₁₁S₄B.

7. The clinker according to any of Claims 1 to 6, **characterized in that** belite C₂S contains at least 30% of C₂S_{α} polymorph.

8. The clinker according to any of Claims 1 to 7, **characterized in that** belite C₂S contains at least 50% of C₂S_{α} polymorph.

9. The clinker according to any of Claims 1 to 8, **characterized in that** it comprises less than 3% of CaOl, less than 5% of C$ and/or less than 10% of C₂AS.

10. A method for preparing a clinker according to any one of Claims 1 to 9, **characterized in that** it comprises the following steps of:
- preparing a raw mix by dosage of raw materials to provide the amounts of elements necessary to obtain the desired phase composition,
- mixing the raw materials,
- curing the mixture of raw materials at a temperature ranging from 1250°C to 1350°C, and
- cooling the clinker rapidly.

11. The method according to Claim 10, **characterized in that** curing step is performed at a temperature ranging from 1280°C to 1340°C.

12. A hydraulic binder comprising a clinker according to any one of Claims 1 to 9.

13. A grout comprising a hydraulic binder according to Claim 12.

14. A concrete comprising a hydraulic binder according to Claim 12.

15. A mortar comprising a hydraulic binder according to Claim 12.
